# EUROPÄISCHE PATENTSCHRIFT

(11) **EP 3 241 621 B1**
(45) Veröffentlichungstag und Bekanntmachung des Hinweises auf die Patenterteilung: **27.03.2019**
(21) Anmeldenummer: 17168647.0
(22) Anmeldetag: 28.04.2017
(51) Int. Cl.: B07C 5/38, B65G 47/00

(54) **VERFAHREN ZUR SORTENREINEN ABLAGE VON BAUTEILEN SOWIE SORTIERVORRICHTUNG**
METHOD FOR SORTING COMPONENTS OF THE SAME KIND AND SORTING DEVICE
PROCÉDÉ DE TRI PAR TYPE DE COMPOSANTS ET DISPOSITIF DE TRI

(30) Priorität: 06.05.2016 DE 102016108419
(43) Veröffentlichungstag der Anmeldung: 08.11.2017
(73) Patentinhaber: Manz AG, 72768 Reutlingen (DE)
(72) Erfinder: FREUNDT, Dr. Martin, 73732 Esslingen (DE); MAURER, Martin, 72827 Wannweil (DE)
(74) Vertreter: Kohler Schmid Möbus Patentanwälte

(56) Entgegenhaltungen:
- DE-A1-102012 003 160
- DE-U1- 9 106 057

## Beschreibung

Die Erfindung betrifft ein Verfahren zur sortenreinen Ablage von Bauteilen für Handhabungssysteme verschiedener Sorten in stapelbaren Behältern.

In Fertigungsstraßen kommt es häufig vor, dass Bauteile unterschiedlicher Sorten beispielsweise auf einem Förderband angeliefert werden. Dies ergibt sich beispielsweise, wenn ein Handhabungssystem unterschiedliche Sorten von Bauteilen verarbeitet. Um diese Bauteile weiterverarbeiten zu können, müssen die Bauteile häufig sortiert und in Behälter zwischengespeichert werden. Gewünscht ist daher die Bereitstellung von Behältern, die jeweils ausschließlich mit einer Sorte von Bauteilen gefüllt sind.

Im Stand der Technik ist es bekannt, unterschiedliche Sorten von Bauteilen in unterschiedliche, parallel befüllbare Trays oder Schubladen einzusortieren. Jedoch muss dazu die Anzahl unterschiedlicher Sorten vorab bekannt sein, um eine entsprechende Anzahl an Trays oder Schubladen zur parallelen Befüllung bereitstellen zu können. Mit steigender Anzahl verschiedener Sorten werden steigende Anzahlen von Trays oder Schubladen benötigt. Diese Sortieranlagen benötigen somit sehr viel Platz für die Vielzahl an Behältern. Außerdem steigen die Zugriffszeiten auf die Trays oder Schubladen, da die Verfahrwege der Handhabungseinrichtung mit wachsender Anzahl von Behältern länger werden. Gleichzeitig ist die Kapazität zur Aufnahme von Bauteilen einer Sorte jeweils limitiert bzw. kann diese nur über redundante, zusätzliche Trays bzw. Schubladen bereitgestellt werden.

Besonders problematisch ist es daher, wenn die Häufigkeit von Bauteilen einer Sorte und/oder die Anzahl unterschiedlicher Sorten vorab nicht bekannt und/oder besonders groß ist.

Ferner sind so genannte "Tray Stacker" (Stapeleinrichtungen für Behälter) mit Speicherfunktion bekannt. Bei diesen wird beispielsweise ein oberster Tray bzw. Behälter mit Bauteilen befüllt bzw. entladen. Ist der Behälter voll, wird der volle Behälter umgestapelt und der dann obenliegende neue, leere Behälter verwendet. Jedoch kann dann immer nur jeweils eine Sorte angelieferter Bauteile verarbeitet werden. Trifft eine andere Sorte ein, so muss gegebenenfalls ein nur teilweise befüllter Behälter entfernt werden, um auf einen neuen, leeren Behälter zugreifen zu können.

Weiterhin sind Tray Stacker mit "random access", das heißt mit zumindest beschränkt wahlfreiem Zugriff auf einzelne Trays, bekannt. Diese sind in der Regel kassettenbasiert. Eine Kassette umfasst dabei eine vordefinierte Anzahl von Behältern, auf die jeweils beliebig zugegriffen werden kann. Ist jedoch bei einem solchen System ein Behälter voll, sodass keine weiteren Bauteile der gleichen Sorte abgelegt werden können, so muss die komplette Kassette gewechselt werden, obwohl sich im ungünstigsten Fall in anderen Behältern der Kassette nur wenige Bauteile befinden.

Aus der DE 91 06 057 U1 ist eine Sortiervorrichtung für Bürsten bekannt, die Bürsten unterschiedlicher Farben farbsortiert in einem Zwischenspeicher ablegt und dann ein Farbsortiment aus dem Zwischenspeicher einer Verpackungsmaschine zuführt.

Aufgabe der vorliegenden Erfindung ist es, ein Verfahren zur sortenreinen Ablage von Bauteilen für Handhabungssysteme sowie eine Sortiervorrichtung anzubieten, die es auf einfache Weise ermöglicht, eine beliebige Anzahl von Bauteilen unterschiedlicher Sorten in beliebiger Häufigkeit und beliebiger Reihenfolge der Sorten zeitoptimiert und platzsparend sortenrein in unterschiedliche Behälter zu sortieren bzw. zu speichern

Gelöst wird diese Aufgabe durch ein Verfahren zur sortenreinen Ablage von Bauteilen für Handhabungssysteme verschiedener Sorten in stapelbaren Behältern, umfassend folgende Schritte:
a. Nacheinander Aufnehmen und Klassifizieren der Sorte von in beliebiger Reihenfolge durch eine Transportvorrichtung angelieferten Bauteilen und Ablegen der Bauteile in einer Zwischenablage an zugeordneten Ablagepositionen;
b. Nach Füllen der Zwischenablage zu einem vorgebbaren Prozentsatz p Auslagern derjenigen Bauteile, die der am häufigsten auf der Zwischenablage vorhandenen Sorte entsprechen, in einen zugehörigen Behälter, wobei der Behälter aus einem Wahlzugriffsbereich eines Behälterstapels ausgewählt wird;
c. Wiederholen der Schritte a. und b., bis ein Behälter einer Sorte gefüllt ist;
d. Bewegen des gefüllten Behälters in einen Speicherbereich des Behälterstapels und Bewegen eines leeren Behälters aus einem Vorratsbereich des Behälterstapels in den Wahlzugriffsbereich des Behälterstapels;
e. Wiederholen der Schritte a. bis d., bis alle angelieferten Bauteile in ihrer Sorte zugeordnete Behälter abgelegt wurden, wobei für jeden vollen, in den Speicherbereich bewegten Behälter ein leerer Behälter in den Vorratsbereich des Behälterstapels geladen wird.

Das Verfahren gemäß der Erfindung ermöglicht es somit, zunächst angelieferte Bauteile aufzunehmen und zu klassifizieren, das heißt die Sorten der Bauteile festzustellen. Die Bauteile können dann in einer Zwischenablage abgelegt werden. Die Zwischenablage kann somit mit einer Vielzahl von Bauteilen unterschiedlicher Sorten befüllt werden, wobei jeweils von jedem Bauteil die Sorte des Bauteils und dessen Ablageposition auf der Zwischenablage bekannt ist.

Sobald die Zwischenablage zu einem vorgebbaren Prozentsatz p gefüllt ist, werden diejenigen Bauteile in einen zugehörigen Behälter ausgelagert, die der am häufigsten auf der Zwischenablage vorhandenen Sorte entsprechen. Dazu wird der Behälter aus einem Wahlzugriffsbereich eines Behälterstapels ausgewählt. Dieser Behälter ist bereits oder wird der Sorte von Bauteilen zugeordnet.

Dies wird solange wiederholt, bis ein zu einer Sorte gehöriger Behälter gefüllt ist. Dieser wird dann in einen Speicherbereich des Behälterstapels bewegt, um sodann im Wahlzugriffsbereich Platz für einen neuen, leeren Behälter aus einem Vorratsbereich des Behälterstapels zu schaffen und einen solchen in den Wahlzugriffsbereich bewegen zu können.

Diese Schritte werden solange wiederholt, bis alle angelieferten Bauteile in ihrer Sorte zugeordnete Behälter abgelegt worden sind. Für jeden vollen, in den Speicherbereich bewegten Behälter wird dabei jeweils ein neuer Behälter in den Vorratsbereich eingebracht, so dass stets genügend Behälter vorrätig bleiben.

Mit diesem Verfahren können beliebige Bauteile in einer beliebigen Anzahl unterschiedlicher Sorten, die in unterschiedlicher Häufigkeit auftreten können, vorteilhaft sortiert werden. Dabei wird insbesondere ausgenutzt, dass es zu keinem Zeitpunkt notwendig ist, die Anzahl der im Behälterstapel gehaltenen Behälter sowie die Anzahl der den Behältern zugeordneten Sorten vorab festzulegen. Die Verwendung eines Behälterstapels ist zudem sehr raumsparend, wodurch sich das Verfahren ganz besonders für das Sortieren von Bauteilen in einer hohen Anzahl verschiedener Sorten eignet. Da ferner Bauteile in der Zwischenablage zwischengespeichert werden, können in der Regel jeweils mehrere Bauteile sehr schnell (vorsortiert) in jeweils einen Behälter geladen werden. Die Erfindung bietet daher ein besonders zeit- und kostenökonomisches Verfahren zur Sortierung von Bauteilen an.

Besonders vorteilhaft ist es, wenn zumindest zwei der Schritte a), b), d) zumindest teilweise zeitparallel durchgeführt werden, um den Zeitbedarf der Sortierung zu reduzieren. So können beispielsweise unabhängig von anderen Verfahrensschritten zunächst Bauteile angenommen, klassifiziert und in der Zwischenablage abgelegt werden. Zeitparallel hierzu können beispielsweise Bauteile aus der Zwischenablage in einen Behälter ausgelagert werden und/oder ein gefüllter Behälter in den Speicherbereich bewegt werden.

Es ist zweckmäßig, als Prozentsatz p des Füllungsgrades der Zwischenablage einen Prozentsatz von mindestens 40% zu wählen. Eine solche Wahl des Füllungsgrades, ab dem Bauteile aus der Zwischenablage ausgelagert werden, ermöglicht es, dass einerseits eine hohe Wahrscheinlichkeit besteht, dass jeweils mehrere Bauteile der gleichen Sorte en bloc in einen Behälter ausgelagert werden können, andererseits, dass nicht zu große Wartezeiten bzw. Zeitabstände entstehen, bis der nächste Behälter mit Bauteilen befüllt wird. Es kann auch vorgesehen sein, dass der Prozentsatz p automatisch oder halbautomatisch, beispielsweise unter Berücksichtigung der Häufigkeit von Bauteilen einer Sorte sowie der Anzahl unterschiedlicher Sorten sowie anhand von Eigenschaften der Sortiervorrichtung, gewählt wird.

Besonders vorteilhaft ist es, wenn der Behälterstapel zum Auswählen eines Behälters in zwei Teilstapel geteilt wird. Dadurch wird es auf einfache Weise möglich, Behälter aus beispielsweise einem mittleren Bereich des Behälterstapels auszuwählen. Somit lässt sich auf einfache Weise ein Behälterstapel mit wahlfreiem Zugriff oder - wenn der Behälterstapel nur innerhalb eines vorgegebenen Bereiches geteilt werden kann - beschränkt wahlfreiem Zugriff realisieren. Beispielsweise kann der Behälterstapel mittels eine Hebevorrichtung angehoben werden und mittels einer Haltevorrichtung gehalten werden. Wird dann der Behälterstapel abgesenkt, so wird der Behälterstapel geteilt und auf den auszuwählenden Behälter kann dann problemlos zugegriffen werden. Mit anderen Worten kann somit auf einfache Weise ein "random access" ermöglicht werden.

Wird zum Auslagern von Bauteilen gemäß Schritt b) ein Behälter dem Behälterstapel temporär entnommen und anschließend wieder in den Behälterstapel eingefügt, so kann beispielsweise der Behälter der Zwischenablage zur Aufnahme von Bauteilen angenähert werden, so dass sich Bauteile schneller von der Zwischenablage in den Behälter auslagern lassen. In alternativen Varianten des Verfahrens kann aber auch vorgesehen sein, dass Bauteile der jeweils betreffenden Sorte aus der Zwischenablage direkt in einen sich weiterhin im Behälterstapel befindlichen, der Sorte zugehörigen Behälter einsortiert werden, sofern dieser durch Teilen des Behälterstapels für das Einlagern der Bauteile auch im Stapel zugänglich ist. Dies kann insbesondere dann vorteilhaft sein, wenn das Auslagern der Bauteile von der Zwischenablage selbst vergleichsweise schnell erfolgen kann, ein Entnehmen und Einfügen eines Behälters in den Behälterstapel jedoch vergleichsweise zeitaufwändig ist.

Vorteilhaft ist es, wenn ein Behälter einer Sorte dadurch zugeordnet wird, dass ein der Sorte zugeordneter Sortencode am Behälter angebracht oder ein am Behälter angebrachter, schreib-/lesbarer Identifizierungsspeicher, vorzugsweise ein RFID-Tag, mit dem Sortencode beschrieben wird. So kann ein Barcode, der die Sorte identifiziert, am Behälter angebracht und später ausgelesen werden. Dadurch kann zu einem späteren Zeitpunkt die dem Behälter zugeordnete Sorte auf besonders schnelle und einfache Weise ermittelt werden, in dem der im RFID-Tag gespeicherte Sortencode oder der Barcode ausgelesen wird. Ebenfalls ist es denkbar, anstelle von RFID alternative, insbesondere berührungsfrei schreib-/lesbare Identifizierungsspeicher, zu verwenden. In einer alternativen Variante kann es auch vorgesehen sein, dass die Behälter mit einem eindeutigen Identifizierungsmerkmal ausgestattet sind und, beispielsweise in einer zentralen Rechnereinheit, eine Zuordnungstabelle verwaltet wird, in der die Identifizierungsmerkmale der Behälter mit den den Behältern zugeordneten Sorten verknüpft werden. Vorteilhaft ist dabei, dass am Behälter dauerhaft ein und das gleiche Identifizierungsmerkmal angebracht sein kann und nicht auf die jeweils zugeordnete Sorte angepasst zu werden braucht. Beispielsweise können somit auf besonders einfache Weise auch Barcodes als Identifizierungsmerkmale der Behälter verwendet werden.

Auch ist es denkbar, dass fehlerbehaftete Bauteile als mindestens eine der Sorten klassifiziert werden. Insbesondere ist es dabei möglich, für jede Sorte fehlerbehaftete Bauteile dieser Sorte als jeweils separate Sorte zu klassifizieren. Dies erleichtert die Feststellung von Fehlerursachen der unterschiedlichen Bauteile gegenüber einem Sammeln aller fehlerbehafteten Bauteile, unabhängig von ihrer Sorte, in einem gemeinsamen Ausschussbehälter.

In den Rahmen der Erfindung fällt weiterhin eine Sortiervorrichtung zur Durchführung des Verfahrens gemäß der Erfindung mit den Merkmalen des Anspruchs 8.

Die Sortiervorrichtung weist eine Greifvorrichtung auf, mit der wenigstens ein Bauteil von der Transportvorrichtung aufnehmbar und in der Zwischenablage ablegbar ist und/oder ein Bauteil aus der Zwischenablage in einen Behälter auslagerbar ist.

Dabei kann die Greifvorrichtung zweckmäßigerweise wenigstens zwei Greifer aufweisen.

Ein Greifer kann dabei zur Aufnahme von Bauteilen von der Transportvorrichtung und zur Ablage in der Zwischenablage und ein anderer Greifer zum Bewegen der Bauteile von der Zwischenablage in einen Behälter vorgesehen sein. Dann können auf einfache Weise mehrere Verfahrensschritte zumindest teilweise zeitparallel ausgeführt werden. Somit kann eine erhebliche Zeitersparnis erzielt werden.

Weiterhin weist die Sortiervorrichtung eine Identifizierungseinheit auf, die eingerichtet ist, eine dem Behälter zugeordnete Sorte von Bauteilen zu identifizieren.

Die Identifizierungseinheit kann beispielsweise eine RFID-Lesevorrichtung zur Auslesung und Auswertung von an den Behältern angeordneten RFID-Tags sein. Auch kann die Identifizierungseinheit beispielsweise ein optischer Sensor, insbesondere eine Kamera, mit Auswerteeinheit sein, die einen am Behälter angebrachten optischen Code oder Markierung erfassen und damit die im Behälter befindliche Bauteilsorte identifizieren kann.

Weiterhin kann vorgesehen sein, dass die Sortiervorrichtung eine Klassifizierungseinheit aufweist, die eingerichtet ist, die Sorte der durch die Transportvorrichtung angelieferten Bauteile festzustellen. Weisen die angelieferten Bauteile beispielsweise bereits vorab eine eindeutige Markierung auf, so kann die Klassifizierungseinheit als Lesegerät mit angeschlossener Auswerteeinheit für diese Markierungen ausgebildet sein. Es kann auch vorgesehen sein, dass die Klassifizierungseinheit ausgebildet ist, ein oder mehrere Eigenschaften der Bauteile, beispielsweise Größe, Form und/oder Farbe, der Bauteile zu bestimmen und daraus die Sorte der Bauteile zu ermitteln. Beispielsweise kann die Klassifizierungseinheit eine Kamera mit angeschlossener Bilderkennungseinheit sein. Dadurch können auf einfache Weise Bauteile schnell und kostengünstig klassifiziert bzw. Sorten der Bauteile ermittelt werden.

Auch kann eine Trennvorrichtung zur Trennung des Behälterstapels an einer beliebigen Stelle innerhalb des Wahlzugriffsbereichs in einen oberen und in einen unteren Teilstapel vorgesehen sein. Die Trennvorrichtung kann beispielsweise aus einer Hebevorrichtung und einer Haltevorrichtung gebildet sein. Somit kann der Behälterstapel mittels der Hebevorrichtung angehoben werden und ein über einem auszuwählenden Behälter befindlicher Behälter mittels der Haltevorrichtung dann arretiert werden. Somit kann der Behälterstapel geteilt werden und ggf. ein Behälter ausgewählt werden, in dem anschließend mittels der Hebevorrichtung der Behälterstapel abgesenkt wird.

Des Weiteren kann eine Zuführvorrichtung zum Laden leerer Behälter in den Vorratsbereich des Behälterstapels und/oder eine Abführvorrichtung für volle Behälter aus dem Speicherbereich des Behälterstapels vorgesehen sein. Somit lassen sich auf einfache Weise leere Behälter in den Vorratsbereich einbringen und befüllte Behälter aus dem Speicherbereich zur weiteren Verwendung entnehmen.

Die Zuordnung eines Behälters zu einer Sorte von Bauteilen ist bei der Erfindung flexibel gestaltbar. Es können zunächst neutrale Behälter verwendet werden, denen im Verlauf des Verfahrens eine Sorte zugeordnet werden kann. Somit kann die Anzahl notwendiger Behälter gering gehalten werden. Nach der Entnahme der Bauteile aus den Behältern können diese wieder der Vorrichtung zugeführt und in den Vorratsbereich des Behälterstapels eingegliedert werden.

Die Sortiervorrichtung gemäß der Erfindung weist außerdem einen geringen Platzbedarf auf, der zudem weitgehend unabhängig von Häufigkeiten von Bauteilen einer Sorte sowie der Anzahl unterschiedlicher Sorten ist. Es ergibt sich somit eine besonders kompakte Bauweise der Sortiervorrichtung.

Weitere Merkmale und Vorteile der Erfindung ergeben sich aus der nachfolgenden Beschreibung eines Ausführungsbeispiels der Erfindung, anhand der Figuren der Zeichnung sowie aus den Ansprüchen. Die dort gezeigten Merkmale sind nicht notwendig maßstäblich zu verstehen und derart dargestellt, dass die erfindungsgemäßen Besonderheiten deutlich sichtbar werden. Die verschiedenen Merkmale können je einzeln für sich oder zu mehreren in beliebigen Kombinationen bei Varianten der Erfindung verwirklicht sein. Es zeigen:
- Fig. 1: eine Sortiervorrichtung gemäß der Erfindung und
- Fig. 2: ein Schema des Verfahrens gemäß der Erfindung.

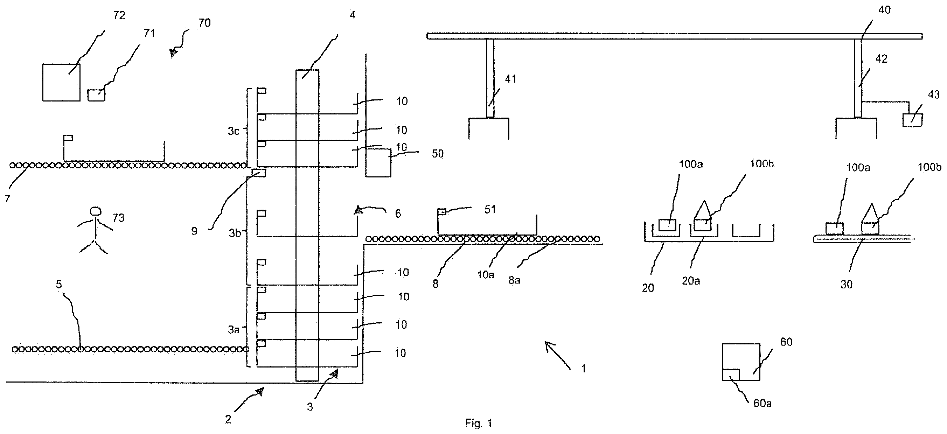

Die Fig. 1 zeigt eine Sortiervorrichtung 1 mit einer Stapelvorrichtung 2, in der ein Behälterstapel 3 angeordnet ist. Der Behälterstapel 3 ist in einen Vorratsbereich 3a, einen Wahlzugriffsbereich 3b und einen Speicherbereich 3c gegliedert. Im Vorratsbereich 3a befinden sich zunächst leere Behälter 10. Im Wahlzugriffsbereich 3b können sich je nach Betriebszustand der Sortiervorrichtung sowohl leere als auch mit zu sortierenden Bauteilen 100a, 100b zumindest teilweise befüllte Behälter 10 befinden. Im Speicherbereich 3c können dagegen befüllte Behälter 10 zwischengelagert bzw. gespeichert werden. Die Behälter 10 sind grundsätzlich gleichartig gebildet und unterscheiden sich ausschließlich hinsichtlich ihres Befüllungsgrades sowie ihrer Position.

Mit einer Zuführvorrichtung 5 können neue, leere Behälter 10 in den Vorratsbereich 3a eingebracht werden. Mit einer Abführvorrichtung 7 können volle Behälter 10 aus dem Speicherbereich 3c entnommen und beispielsweise für eine Weiterverarbeitung abgeführt werden. Die Zuführvorrichtung 5 als auch die Abführvorrichtung 7 sind in diesem Ausführungsbeispiel als auf die Behälter 10 angepasste Rollenförderer ausgebildet.

Auf in etwa mittlerer Höhe der Stapelvorrichtung 2, insbesondere in Höhe des Wahlzugriffsbereichs 3b, befindet sich eine Prozessstation 8, auf der sich ein ausgewählter Behälter 10a befindet. Die Prozessstation 8 weist einen Rollenförderer 8a auf, mit der der ausgewählte Behälter 10a über eine auf Höhe des Wahlzugriffsbereichs 3b befindliche Wahlzugriffsöffnung 6 der Stapelvorrichtung 2 in diese eingefahren bzw. aus dieser herausgefahren werden kann und somit dem Behälterstapel 3 entnommen bzw. in diesen eingefügt werden kann.

In alternativen Ausführungsformen ist es vorgesehen, anstelle des Rollenförderers 8a eine Lade-/Entladevorrichtung, insbesondere einen Lade-/Entladearm, zum Ein- bzw. Ausbringen eines Behälters über die Wahlzugriffsöffnung 6 vorzusehen. Ebenso sind alternative Ausführungsformen vorgesehen, bei denen der ausgewählte Behälter 10a im Behälterstapel 3 verbleibt und unmittelbar, beispielsweise durch einen Greifer, mit Bauteilen beladen wird. Somit wird zumindest ein auf den Wahlzugriffsbereich 3b beschränkter wahlfreier Zugriff auf dort befindliche Behälter 10 ermöglicht.

Der Behälterstapel 3 kann durch eine Hebevorrichtung 4 angehoben oder abgesenkt werden. Ferner ist eine Haltevorrichtung 9 an der Stapelvorrichtung 2 angeordnet, mit der der Behälterstapel 3 bzw. Teile des Behälterstapels 3 gehalten werden können. Somit kann der Behälterstapel 3 zunächst angehoben werden, dann ein über einem auszuwählenden Behälter befindlicher Behälter mittels der Haltevorrichtung 9 gehalten und der Behälterstapel 3 wieder abgesenkt werden, so dass der Behälterstapel 3 im Bereich des auszuwählenden Behälters geteilt wird. Somit kann anschließend der ausgewählte Behälter 10a über die Wahlzugriffsöffnung 6 entnommen bzw. in den Behälterstapel 3 wieder eingefügt werden. Die Hebevorrichtung 4 und die Haltevorrichtung 9 bilden somit zusammen eine Trennvorrichtung, mit der der Behälterstapel getrennt bzw. an einer definierten Stelle in einen oberen und in einen unteren Teilstapel geteilt werden kann.

Die Sortiervorrichtung 1 weist ferner eine Greifvorrichtung 40 mit einem ersten Greifer 41 und einem zweiten Greifer 42 auf. Am zweiten Greifer 42 ist eine Klassifizierungseinheit 43 angeordnet.

In der Nähe der Prozessstation 8, insbesondere innerhalb eines Aktionsradius der Greifvorrichtung 40, befindet sich eine Zwischenablage 20. Ebenfalls innerhalb des Aktionsradius der Greifvorrichtung 40 befindet sich eine Transportvorrichtung 30.

Die Transportvorrichtung 30 ist in diesem Ausführungsbeispiel als Förderband ausgebildet. Auf der Transportvorrichtung 30 werden unterschiedliche, zu sortierende Bauteile angeliefert. Der Fig. 1 ist zu entnehmen, dass die Transportvorrichtung 30 in diesem Beispiel ein Bauteil einer ersten Sorte 100a sowie mehrere Bauteile einer zweiten Sorte 100b anliefert.

Weiterhin ist der Fig. 1 eine an der Stapelvorrichtung 2 angeordnete Identifizierungseinheit 50 zu entnehmen. Die Identifizierungseinheit 50 ist ausgebildet, eine einem Behälter 10 zugeordnete Sorte 100a, 100b anhand eines am Behälter 10 angebrachten Sortencodes zu identifizieren bzw., falls dem Behälter 10 bisher noch keine Sorte zugeordnet ist, diesem eine Sorte neu zuzuordnen. In diesem Ausführungsbeispiel ist die Identifizierungseinheit 50 als RFID-Schreib-/Lesegerät ausgebildet, mit dem an den Behältern 10 angeordnete schreib-/lesbare RFID-Tags 51 gelesen und geschrieben werden können.

Des Weiteren ist der Fig. 1 eine Steuereinheit 60 mit einer Speichereinheit 60a zu entnehmen, mit der die Sortiervorrichtung 1 gesteuert und überwacht wird.

Behälter 10, die über die Abführvorrichtung 7 der Sortiervorrichtung 1 entnommen werden, können weiteren Bearbeitungsschritten zugeführt werden. In der Fig. 1 ist dazu beispielhaft ein der Sortiervorrichtung 1 nachgelagerter Bearbeitungsplatz 70 dargestellt. An diesem Bearbeitungsplatz 70 befindet sich eine zweite Identifizierungseinheit 71 zur Ermittlung der einem am Bearbeitungsplatz 70 befindlichen Behälter zugeordneten Sorte von Bauteilen. Diese wird mittels einer Anzeigeeinheit 72 visuell darstellt. Ein Bearbeiter 73 kann dann die in dem Behälter enthaltenen Bauteile sortenspezifisch weiterbearbeiten.

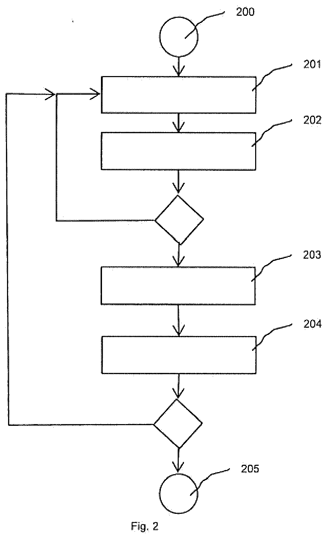

Anhand der Fig. 2 wird nun im Folgenden unter Bezugnahme auf die Fig. 1 das Verfahren gemäß der Erfindung und somit die Betriebsweise der Sortiervorrichtung 1 näher erläutert.

Zunächst werden nach Start 200 des Verfahrens in einem ersten Schritt 201 durch die Transportvorrichtung 30 Bauteile einer ersten Sorte 100a sowie Bauteile einer zweiten Sorte 100b angeliefert. Es versteht sich, dass die Transportvorrichtung 30 eine beliebige Anzahl unterschiedlicher Sorten 100a, 100b von Bauteilen anliefern kann, und nur beispielhaft das Verfahren anhand zweier verschiedener Sorten 100a, 100b erläutert wird.

Mittels des zweiten Greifers 42 und der Klassifizierungseinheit 43 wird ein angeliefertes erstes Bauteil 100a, 100b aufgenommen und gemäß seiner Sorte, das heißt in diesem Fall in die erste Sorte oder die zweite Sorte, klassifiziert.

In diesem Fall unterscheiden sich die angelieferten Bauteile 100a, 100b gemäß ihrer Form. Daher ist die Klassifizierungseinheit 43 in diesem Ausführungsbeispiel als Kamera mit angeschlossener Bilderkennungseinheit ausgebildet. Gleichzeitig ist die Klassifizierungseinheit 43 ausgebildet, fehlerbehaftete Bauteile zu erkennen. Diesen ordnet die Klassifizierungseinheit 43 sortenspezifische Fehler-Sortencodes zu, so dass diese fehlerbehafteten Bauteile analog zu fehlerfreien Bauteilen sortiert werden können, dennoch aber diese fehlerbehafteten Bauteile in sortenspezifische Behälter einsortiert werden, um eine sortenspezifische Fehlerbehandlung zu ermöglichen.

Anschließend wird das Bauteil 100a, 100b in der Zwischenablage 20 an einer bisher noch leeren Ablageposition 20a abgelegt.

Dazu wird in der Speichereinheit 60a der Steuereinheit 60 gespeichert, welche Sorte das abgelegte Bauteil 100a, 100b aufweist und an welcher Ablageposition, in diesem Beispiel die Ablageposition 20a, das Bauteil 100a, 100b in der Zwischenablage abgelegt ist. Somit wird in der Steuereinheit 60 zwischengespeichert, ob bzw. welche Bauteile 100a, 100b welcher Sorte an welcher Ablageposition 20a in der Zwischenablage 20 abgelegt sind.

In einem folgenden Schritt 202 wird, sobald die Zwischenablage 20 zu einem vorgebbaren Prozentsatz p, in diesem Fall zu 40 Prozent, gefüllt ist, durch die Steuereinheit 60 unter Verwendung der in der Speichereinheit 60a abgelegten Daten ermittelt, welche Sorte am häufigsten in der Zwischenablage 20 vorhanden ist.

Sodann wird ein dieser Sorte zugeordneter Behälter 10a aus dem Wahlzugriffsbereich 3b ausgewählt, dem Behälterstapel 3 temporär entnommen und über den Rollenförderer 8a auf die Prozess-Station 8 verlagert, dort mittels des ersten Greifers 41 mit Bauteilen dieser Sorte aus der Zwischenablage 20 befüllt und anschließend wieder im Behälterstapel 3 eingefügt.

Die Auswahl und die Einfügung des Behälters 10a erfolgt dabei, in dem der Behälterstapel 3 an der Position, an der sich der auszuwählende Behälter 10a befindet, mittels der Trennvorrichtung, d. h. der Hebevorrichtung 4 und der Haltevorrichtung 9, geteilt wird und sodann der Behälter 10a entnommen bzw. eingefügt wird.

Ist kein der Sorte zugeordneter Behälter 10 verfügbar, so wird ein bisher unbenutzter, "neutraler" Behälter ausgewählt und diesem mittels der Identifizierungseinheit 50 die Sorte zugeordnet.

Die Schritte 201 und 202 werden solange wiederholt, bis zumindest ein Behälter 10 gefüllt ist.

Sodann wird in einem Schritt 203 der gefüllte Behälter 10 in den Speicherbereich 3c des Behälterstapels 3 mittels der Hebevorrichtung 4 bewegt. Ein leerer Behälter 10 wird parallel hierzu dem Vorratsbereich 3a entnommen und in den Wahlzugriffsbereich 3b des Behälterstapels 3 gebracht.

Solange noch durch die Transportvorrichtung 30 angelieferte Bauteile 100a, 100b vorhanden sind, werden die Schritte 201 bis 203 wiederholt, wobei sobald die Anzahl leerer Behälter 10 des Vorratsbereichs 3a eine vordefinierte Anzahl unterschreitet, über die Zuführvorrichtung 5 für jeden vollen, in den Speicherbereich 3c bewegten Behälter 10 ein neuer, leerer Behälter 10 in den Vorratsbereich 3a des Behälterstapels 3 geladen wird.

Sind alle Bauteile 100a, 100b verarbeitet bzw. sortiert, erreicht das Verfahren das Verfahrensende 205.

Während bisher das Verfahren gemäß der Erfindung als sequentielles Verfahren beschrieben ist, versteht es sich, dass erfindungsgemäß vorgesehen ist, insbesondere zur Beschleunigung und zur Erhöhung der Taktfrequenz bzw. des Durchsatzes der Sortiervorrichtung 1, einzelne Schritte bzw. Verfahrensabschnitte zeitparallel zu anderen Schritten bzw. Verfahrensabschnitten durchzuführen.

Insbesondere ist es in diesem Ausführungsbeispiel vorgesehen, parallel zur Aufnahme, Klassifikation und Ablage von Bauteilen 100a, 100b, auf der Zwischenablage 20 Bauteile 100a, 100b von der Zwischenablage 20 in ausgewählte Behälter 10a und somit zeitoptimiert zu verlagern.

Durch das erfindungsgemäße Verfahren zur sortenreinen Ablage von Bauteilen bzw. die erfindungsgemäße Sortiervorrichtung 2 können somit in besonders schneller Weise, kostengünstig und mit geringem Platzbedarf Bauteile 100a, 100b beliebiger Sorten und beliebiger Häufigkeiten sortenrein in Behälter 10 zur Weiterverarbeitung sortiert, in der Stapelvorrichtung 2 gespeichert und über die Abführvorrichtung 7 einer Weiterverarbeitung zugeführt werden.

Da anhand der RFID-Tags 51 die dem Behälter zugehörige Sorte bestimmt ist, kann beispielsweise die zweite Identifizierungseinheit 71 an dem Bearbeitungsplatz 70 eine einem Behälter zugehörige Sorte anhand des gespeicherten Sortencodes identifizieren und auf der Anzeigeeinheit 72 dem Bearbeiter 73 zur Kenntnis bringen. Somit wird der Bearbeiter 73 in die Lage versetzt, entsprechend der dem Behälter zugeordneten Sorte die darin enthaltenen Bauteile 100a, 100b geeignet weiterzuverarbeiten.

### Bezugszeichenliste

- 1: Sortiervorrichtung
- 2: Stapelvorrichtung
- 3: Behälterstapel
- 3a: Vorratsbereich
- 3b: Wahlzugriffsbereich
- 3c: Speicherbereich
- 4: Hebevorrichtung
- 5: Zuführvorrichtung
- 6: Wahlzugriffsöffnung
- 7: Abführvorrichtung
- 8: Prozess-Station
- 8a: Rollenförderer
- 9: Haltevorrichtung
- 10: Behälter
- 10a: ausgewählter Behälter
- 20: Zwischenablage
- 20a: Ablageposition
- 30: Transportvorrichtung
- 40: Greifvorrichtung
- 41: Erster Greifer
- 42: Zweiter Greifer
- 43: Klassifizierungseinheit
- 50: Identifizierungseinheit
- 51: RFID-Tag
- 60: Steuereinheit
- 60a: Speichereinheit
- 70: Bearbeitungsplatz
- 71: Zweite Identifizierungseinheit
- 72: Anzeigeeinheit
- 73: Bearbeiter
- 100a: Bauteil erster Sorte
- 100b: Bauteil zweiter Sorte
- 200: Start
- 201 - 204: Schritt
- 205: Verfahrensende

## Patentansprüche

1. Verfahren zur sortenreinen Ablage von Bauteilen (100a, 100b) für Handhabungssysteme verschiedener Sorten in stapelbaren Behältern (10), umfassend folgende Schritte:
a. Nacheinander Aufnehmen und Klassifizieren der Sorte von in beliebiger Reihenfolge durch eine Transportvorrichtung (30) angelieferten Bauteilen (100a, 100b) und Ablegen der Bauteile (100a, 100b) in einer Zwischenablage (20) an zugeordneten Ablagepositionen (20a);
b. Nach Füllen der Zwischenablage (20) zu einem vorgebbaren Prozentsatz p Auslagern derjenigen Bauteile (100a, 100b), die der am häufigsten auf der Zwischenablage (20) vorhandenen Sorte entsprechen, in einen zugehörigen Behälter (10), wobei der Behälter (10) aus einem Wahlzugriffsbereich (3b) eines Behälterstapels (3) ausgewählt wird;
c. Wiederholen der Schritte a. und b., bis ein Behälter (10) einer Sorte gefüllt ist;
d. Bewegen des gefüllten Behälters (10) in einen Speicherbereich (3c) des Behälterstapels (3) und Bewegen eines leeren Behälters (10) aus einem Vorratsbereich (3a) des Behälterstapels (3) in den Wahlzugriffsbereich (3b) des Behälterstapels (3);
e. Wiederholen der Schritte a. bis d., bis alle angelieferten Bauteile (100a, 100b) in ihrer Sorte zugeordnete Behälter (10) abgelegt wurden, wobei für jeden vollen, in den Speicherbereich (3c) bewegten Behälter (10) ein leerer Behälter (10) in den Vorratsbereich (3a) des Behälterstapels (3) geladen wird.

2. Verfahren nach Anspruch 1, **dadurch gekennzeichnet, dass** zumindest zwei der Schritte a), b), d) zumindest teilweise zeitparallel durchgeführt werden.

3. Verfahren nach einem der vorhergehenden Ansprüche, **dadurch gekennzeichnet, dass** der Behälterstapel (3) zum Auswählen eines Behälters (10) in zwei Teilstapel geteilt wird.

4. Verfahren nach einem der vorhergehenden Ansprüche, **dadurch gekennzeichnet, dass** zum Auslagern von Bauteilen (100a, 100b) gemäß Schritt b) ein Behälter (10) dem Behälterstapel (3) temporär entnommen und anschließend wieder in den Behälterstapel (3) eingefügt wird.

5. Verfahren nach einem der vorhergehenden Ansprüche, **dadurch gekennzeichnet, dass** ein Behälter (10) einer Sorte dadurch zugeordnet wird, dass ein der Sorte zugeordneter Sortencode am Behälter (10) angebracht oder ein am Behälter angebrachter, schreib-/lesbarer Identifizierungsspeicher, vorzugsweise ein RFID-Tag (51), mit dem Sortencode beschrieben wird.

6. Verfahren nach einem der vorhergehenden Ansprüche, **dadurch gekennzeichnet, dass** fehlerbehaftete Bauteile (100a, 100b) als mindestens eine der Sorten klassifiziert werden.

7. Verfahren nach Anspruch 6, **dadurch gekennzeichnet, dass** für jede Sorte fehlerbehaftete Bauteile dieser Sorte als jeweils separate Sorte klassifiziert werden.

8. Sortiervorrichtung (1) zur Durchführung des Verfahrens nach einem der vorhergehenden Ansprüche mit einem Behälterstapel (3), wobei der Behälterstapel (3) wenigstens einen Vorratsbereich (3a), einen Wahlzugriffsbereich (3b) sowie einen Speicherbereich (3c) aufweist, wobei der Behälterstapel (3) eingerichtet ist, dass wenigstens ein Behälter (10) aus dem Wahlzugriffsbereich (3b) auswählbar und mit Bauteilen (100a, 100b) einer Sorte befüllbar ist, und mit einer Transportvorrichtung (30) zur Anlieferung von Bauteilen (100a, 100b), und einer Zwischenablage (20) mit vorgegebenen Ablagepositionen (20a), **dadurch gekennzeichnet, dass** die Sortiervorrichtung (1) eine Greifvorrichtung (40) aufweist, mit der wenigstens ein Bauteil (100a, 100b) von der Transportvorrichtung (30) aufnehmbar und in der Zwischenablage (20) ablegbar ist und/oder ein Bauteil (100a, 100b) aus der Zwischenablage (20) in einen Behälter (10) auslagerbar ist und dass die Sortiervorrichtung (1) eine Identifizierungseinheit (50) aufweist, die eingerichtet ist, eine dem Behälter (10) zugeordnete Sorte zu identifizieren.

9. Sortiervorrichtung (1) nach Anspruch 8, **dadurch gekennzeichnet, dass** die Greifvorrichtung (40) wenigstens zwei Greifer (41, 42) aufweist.

10. Sortiervorrichtung (1) nach Anspruch 9, **dadurch gekennzeichnet, dass** ein Greifer (41, 42) zur Aufnahme von Bauteilen (100a, 100b) von der Transportvorrichtung (30) und zur Ablage in der Zwischenablage (20) und ein anderer Greifer (41,42) zum Bewegen der Bauteile (100a, 100b) von der Zwischenablage (20) in einen Behälter (10) vorgesehen ist.

11. Sortiervorrichtung (1) nach einem der Ansprüche 8 bis 10, **dadurch gekennzeichnet, dass** die Sortiervorrichtung (1) eine Klassifizierungseinheit (43) aufweist, die eingerichtet ist, die Sorte der durch die Transportvorrichtung (30) angelieferten Bauteile (100a, 100b) festzustellen.

12. Sortiervorrichtung (1) nach einem der Ansprüche 8 bis 11, **dadurch gekennzeichnet, dass** eine Trennvorrichtung zur Trennung des Behälterstapels (3) an einer beliebigen Stelle innerhalb des Wahlzugriffsbereichs (3b) in einen oberen und in einen unteren Teilstapel vorgesehen ist.

13. Sortiervorrichtung (1) nach einem der Ansprüche 8 bis 12, **dadurch gekennzeichnet, dass** eine Zuführvorrichtung (5) zum Laden leerer Behälter (10) in den Vorratsbereich (3a) des Behälterstapels (3) und/oder eine Abführvorrichtung (7) zur Entfernung voller Behälter (10) aus dem Speicherbereich (3c) des Behälterstapels (3) vorgesehen ist.

## Claims

1. Method of depositing components (100a, 100b) of different types for handling systems in stackable containers (10) in such a manner that they are sorted according to type, comprising the following steps:
a. picking up components (100a, 100b) delivered in any desired sequence by a transport device (30) one by one and classifying their type, then depositing the components (100a, 100b) in an intermediate store (20) at associated storage locations (20a);
b. once the intermediate store (20) has been filled to a predetermined percentage p, transferring those components (100a, 100b) corresponding to the predominant type present in the intermediate store (20) to an associated container (10), wherein the container (10) is selected from a random access area (3b) of a container stack (3);
c. repeating steps a. and b. until a container (10) of one type has been filled;
d. moving the filled container (10) into a storage area (3c) of the container stack (3) and moving an empty container (10) from a supply area (3a) of the container stack (3) into the random access area (3b) of the container stack (3), and
e. repeating steps a. to d. until all of the components (100a, 100b) delivered have been deposited in containers (10) associated with their type, wherein, for each full container (10) moved into the storage area (3c), an empty container (10) is loaded into the supply area (3a) of the container stack (3).

2. Method according to claim 1, **characterised in that** at least two of the steps a), b) and d) are carried out at least partially simultaneously.

3. Method according to one of the preceding claims, **characterised in that** the container stack (3) is divided into two sub-stacks for selecting a container (10).

4. Method according to one of the preceding claims, **characterised in that**, for the transfer of components (100a, 100b) according to step b), one container (10) is removed temporarily from the container stack (3) and then returned to the container stack (3).

5. Method according to one of the preceding claims, **characterised in that** a container (10) is associated with a type by applying a type code associated with the type to the container (10) or by writing the type code to a read/write identification memory, preferably an RFID tag (51), applied to the container.

6. Method according to one of the preceding claims, **characterised in that** defective components (100a, 100b) are classified as at least one of the types.

7. Method according to claim 6, **characterised in that**, for each type, defective components of this type are each classified as a separate type.

8. Sorting device (1) for carrying out the method according to one of the preceding claims, comprising a container stack (3), wherein the container stack (3) has at least one supply area (3a), one random access area (3b) and one storage area (3c) and wherein the container stack (3) is designed in such a manner that at least one container (10) can be selected from the random access area (3b) and can be filled with components (100a, 100b) of one type, and comprising a transport device (30) for delivering components (100a, 100b) and an intermediate store (20) with predetermined storage locations (20a), **characterised in that** the sorting device (1) has a gripping device (40) by means of which at least one component (100a, 100b) can be picked up from the transport device (30) and deposited in the intermediate store (20) and/or a component (100a, 100b) can be transferred from the intermediate store (20) to a container (10) and that the sorting device (1) has an identification unit (50) designed to identify a type associated with the container (10).

9. Sorting device (1) according to claim 8, **characterised in that** the gripping device (40) has at least two grippers (41, 42).

10. Sorting device (1) according to claim 9, **characterised in that** one gripper (41, 42) is provided for picking up components (100a, 100b) from the transport device (30) and for depositing them in the intermediate store (20) and another gripper (41, 42) is provided for moving the components (100a, 100b) from the intermediate store (20) to a container (10).

11. Sorting device (1) according to one of claims 8 to 10, **characterised in that** the sorting device (1) has a classification unit (43) designed to detect the type of the components (100a, 100b) delivered by the transport device (30).

12. Sorting device (1) according to one of claims 8 to 11, **characterised by** a separating device for separating the container stack (3) into upper and lower sub-stacks at any desired point within the random access area (3b).

13. Sorting device (1) according to one of claims 8 to 12, **characterised by** a feed device (5) for loading empty containers (10) into the supply area (3a) of the container stack (3) and/or a discharge device (7) for removing full containers (10) from the storage area (3c) of the container stack (3).

## Revendications

1. Procédé de tri par type de composants (100a, 100b) pour systèmes de manipulation de différents types dans des récipients empilables (10), comprenant les étapes suivantes :
a. successivement réception et classification du type de composants (100a, 100b) livrés dans n'importe quel ordre par un dispositif de transport (30) et dépôt des composants (100a, 100b) dans un dépôt intermédiaire (20) à des positions de dépôt associées (20a) ;
b. après le remplissage du dépôt intermédiaire (20) à un pourcentage p pouvant être prédéfini, déchargement des composants (100a, 100b), qui correspondent au type le plus fréquent sur le dépôt intermédiaire (20), dans un récipient associé (10), dans lequel le récipient (10) est sélectionné à partir d'une zone d'accès au choix (3b) d'une pile de récipients (3) ;
c. répétition des étapes a. et b., jusqu'à ce qu'un récipient (10) d'un type soit rempli ;
d. déplacement du récipient (10) rempli dans une zone de stockage (3c) de la pile de récipients (3) et déplacement d'un récipient (10) vide d'une zone de réserve (3a) de la pile de récipients (3) dans la zone d'accès au choix (3b) de la pile de récipients (3) ;
e. répétition des étapes a. à d., jusqu'à ce que tous les composants (100a, 100b) livrés aient été déposés dans des récipients (10) associés à leur type, dans lequel pour chaque récipient (10) plein, déplacé dans la zone de stockage (3c) un récipient (10) vide est chargé dans la zone de réserve (3a) de la pile de récipients (3).

2. Procédé selon la revendication 1, **caractérisé en ce qu'**au moins deux des étapes a), b), d) sont réalisées au moins en partie simultanément.

3. Procédé selon l'une quelconque des revendications précédentes, **caractérisé en ce que** la pile de récipients (3) est divisée en deux sous-piles pour la sélection d'un récipient (10).

4. Procédé selon l'une quelconque des revendications précédentes, **caractérisé en ce que** pour le déchargement de composants (100a, 100b) selon l'étape b), un récipient (10) est prélevé temporairement de la pile de récipients (3) et ensuite à nouveau inséré dans la pile de récipients (3).

5. Procédé selon l'une quelconque des revendications précédentes, **caractérisé en ce qu'**un récipient (10) est associé à un type par le fait qu'un code de type associé au type est placé sur le récipient (10) ou une mémoire d'identification inscriptible/lisible, placée sur le récipient, de préférence une étiquette RFID (51), avec le code de type est décrite.

6. Procédé selon l'une quelconque des revendications précédentes, **caractérisé en ce que** des composants défectueux (100a, 100b) sont classés en tant qu'au moins un des types.

7. Procédé selon la revendication 6, **caractérisé en ce que** pour chaque type, des composants défectueux de ce type sont classés en tant que type respectivement séparé.

8. Dispositif de tri(1) pour l'exécution du procédé selon l'une quelconque des revendications précédentes avec une pile de récipients (3), dans lequel la pile de récipients (3) présente au moins une zone de réserve (3a), une zone d'accès au choix (3b) ainsi qu'une zone de stockage (3c), dans lequel la pile de récipients (3) est aménagée de sorte qu'au moins un récipient (10) peut être sélectionné à partir de la zone d'accès au choix (3b) et être rempli de composants (100a, 100b) d'un type, et avec un dispositif de transport (30) pour la livraison de composants (100a, 100b), et un dépôt intermédiaire (20) avec des positions de dépôt (20a) prédéfinies, **caractérisé en ce que** le dispositif de tri (1) présente un dispositif de préhension (40), avec lequel au moins un composant (100a, 100b) peut être reçu par le dispositif de transport (30) et être déposé dans le dépôt intermédiaire (20) et/ou un composant (100a, 100b) peut être déchargé du dépôt intermédiaire (20) dans un récipient (10) et que le dispositif de tri (1) présente une unité d'identification (50), qui est aménagée pour identifier un type associé au récipient (10).

9. Dispositif de tri(1) selon la revendication 8, **caractérisé en ce que** le dispositif de préhension (40) présente au moins deux préhenseurs (41, 42)

10. Dispositif de tri(1) selon la revendication 9, **caractérisé en ce qu'**un préhenseur (41, 42) est prévu pour la réception de composants (100a, 100b) du dispositif de transport (30) et pour le dépôt dans le dépôt intermédiaire (20) et un autre préhenseur (41, 42) est prévu pour le déplacement des composants (100a, 100b) du dépôt intermédiaire (20) à un récipient (10).

11. Dispositif de tri(1) selon l'une quelconque des revendications 8 à 10, **caractérisé en ce que** le dispositif de tri (1) présente une unité de classification (43), qui est aménagée pour constater le type des composants (100a, 100b) livrés par le dispositif de transport (30).

12. Dispositif de tri(1) selon l'une quelconque des revendications 8 à 11, **caractérisé en ce qu'**un dispositif de séparation est prévu pour séparer la pile de récipients (3) à n'importe quel endroit à l'intérieur de la zone d'accès au choix (3b) en une sous-pile supérieure et en une sous-pile inférieure.

13. Dispositif de tri(1) selon l'une quelconque des revendications 8 à 12, **caractérisé en ce qu'**un dispositif d'amenée (5) est prévu pour le chargement de récipients (10) vides dans la zone de réserve (3a) de la pile de récipients (3) et/ou un dispositif d'évacuation (7) est prévu pour le retrait de récipients (10) pleins de la zone de stockage (3c) de la pile de récipients (3).
